# EUROPÄISCHE PATENTSCHRIFT

(11) **EP 2 828 349 B1**
(45) Veröffentlichungstag und Bekanntmachung des Hinweises auf die Patenterteilung: **23.08.2017**
(21) Anmeldenummer: 13711347.8
(22) Anmeldetag: 20.03.2013
(51) Int. Cl.: C09D 175/16, C09D 7/06, C09D 7/12, C09D 201/00

(54) **LACK ZUR BESCHICHTUNG VON RIEFEN AUFWEISENDEN KUNSTSTOFFOBERFLÄCHEN**
COATING FOR COATING PLASTIC SURFACES WHICH HAVE GROOVES
PEINTURE POUR REVÊTIR DES SURFACES EN PLASTIQUE PRÉSENTANT DES CANNELURES

(30) Priorität: 20.03.2012 EP 12160390
(43) Veröffentlichungstag der Anmeldung: 28.01.2015
(73) Patentinhaber: profine GmbH, 53840 Troisdorf (DE); Rhenocoll-Werk eK., 68309 Mannheim (DE)
(72) Erfinder: EGER, Arno, 66987 Thaleischweiler (DE); GÖTZ, Gerhard, 90574 Rosstal (DE); ZIMMERMANN, Werner, 66887 Ulmet (DE); AREND, Sandra, 66916 Breitenbach (DE)
(74) Vertreter: Wübken, Ludger
(86) Internationale Anmeldenummer: PCT/EP2013/055759
(87) Internationale Veröffentlichungsnummer: WO 2013/139824

(56) Entgegenhaltungen:
- CN-A- 101 440 252
- CN-A- 101 870 846
- JP-A- 57 108 106
- JP-A- 62 109 830
- JP-A- 2004 315 546
- KR-B1- 100 893 215
- US-A1- 2003 027 010
- US-A1- 2011 113 721
- DATABASE COMPENDEX [Online] ENGINEERING INFORMATION, INC., NEW YORK, NY, US; November 2005 (2005-11), SONG H-J ET AL: "Tribological performance of nano- and micro-TiO2 filled polyurethane coatings with polyfluo-wax", XP002683151, Database accession no. E2006069686783 & MOCAXUE XUEBAO/TRIBOLOGY NOVEMBER 2005 SCIENCE PRESS CN, Bd. 25, Nr. 6, November 2005 (2005-11), Seiten 525-529,

## Beschreibung

Die Erfindung betrifft einen Lack zur Beschichtung von Kunststoffoberflächen, die Riefen aufweisen.

### Technisches Gebiet

Bei der Extrusion von Kunststoffprofilen o. dgl., beispielsweise von Hohlkammerprofilen aus PVC, wie sie in großem Umfang für die Herstellung von Fenstern und Türen eingesetzt werden, ist es gelegentlich unvermeidbar, dass die Kunststoffoberflächen in Extrusionsrichtung verlaufende Riefen, also Vertiefungen in der Oberfläche, aufweisen.

### Stand der Technik

Aus der DE 22 46 497 B2 ist es bekannt, solche PVC-Hohlkammerprofile mit einer Oberflächenschicht aus Polymethylmetacrylat (PMMA) zu koextrudieren. Die koextrudierte PMMA-Oberfläche ist dabei in der Lage, Riefen und andere Oberflächenstörungen des PVC-Profils weitgehend zu überdecken. Eine Coextrusion mit PMMA ist jedoch aufwändig.

Weiterhin ist es grundsätzlich bekannt, Kunststoffoberflächen zu lackieren. Übliche Lacke sind allerdings nicht in der Lage, typische, bei der Extrusion von Kunststoffoberflächen, insbesondere von PVC entstehende Riefen größerer Tiefe zu überdecken.

### Aufgabe

Aufgabe der vorliegenden Erfindung ist es daher, eine Oberflächenbeschichtung, insbesondere einen Lack, zur Verfügung zu stellen, der auch tiefere Riefen in Kunststoffoberflächen, insbesondere PVC-Profilen, ausgleichen kann.

### Darstellung der Erfindung

Die Erfindung löst diese Aufgabe durch ein Verfahren nach Anspruch 1, insbesondere in Verbindung mit einem oder mehreren der Merkmale der Ansprüche 2 bis 15. Weiterhin ist Gegenstand der Erfindung ein mit dem erfindungsgemäßen Lack beschichtetes PVC-Substrat.

Unter Riefen im Sinne der vorliegenden Erfindung werden in Extrusionsrichtung verlaufende, insbesondere quasi endlos verlaufende, wenigstens 0,2 mm tiefe und wenigstens 0,2 mm breite Vertiefungen der Oberfläche verstanden.

Der erfindungsgemäße Lack zur Beschichtung von Riefen aufweisenden Kunststoffoberflächen enthält wenigstens ein vernetzbares Bindemittel, wenigstens ein in dem Bindemittel dispergiertes Wachs sowie in dem Bindemittel dispergierte nanoskalige anorganische Partikel, insbesondere Metalloxide.

Als vernetzbares Bindemittel wird bevorzugt ein wasserbasierter Polyurethan-Acrylatlack verwendet. Wasserbasiert bedeutet, dass das eingesetzte Lösungsmittel für den Lack überwiegend aus Wasser besteht. Daneben können auch organische Lösungsmittel in mehr oder weniger großen Anteilen verwendet werden, um das Trocknungsverhalten des Lackes und/oder dessen Haftung auf dem Substrat zu beeinflussen. Bevorzugt enthält der Lack jedoch weniger als 10 Gew.-% organische Lösungsmittel.

Es ist erfindungswesentlich, dass der Lack wenigstens ein im Bindemittel dispergiertes Wachs aufweist. Es hat sich als vorteilhaft erwiesen, wenn dieses Wachs ein modifiziertes, in einem Lösungsmittel gelöstes bzw. emulgiertes, bei Raumtemperatur flüssiges HD-Polyethylenwachs einzusetzen, wobei die Emulsion eine Dichte von > 1,4 kg/m³ bei 20 °C aufweist.

Als Basis für die bevorzugt eingesetzte Wachsemulsion wird Wasser eingesetzt. Um die Mindestfilmbildetemperatur des Wachses herabzusetzen, werden dem Fachmann an sich bekannte organische Lösungsmittel zugesetzt, so dass wenigstens ein Teil des Wachses bei Raumtemperatur und bevorzugt bei noch geringeren Temperaturen in Lösung verbleibt.

Damit liegt die Dichte dieses Wachses höher als die mittlere Dichte des erfindungsgemäßen Lackes, so dass sich diese Wachse schneller in dem applizierten Lack auf der Kunststoffoberfläche absetzen können. Es wird vermutet, dass sich hierdurch die Riefen ausgleichende Wirkung des erfindungsgemäßen Lackes positiv beeinflusst wird.

Nach einer bevorzugten Ausführungsform der Erfindung werden wenigstens zwei Wachse mit unterschiedlichen Schmelzpunkten und Dichten eingesetzt, wobei wiederum bevorzugt wenigstens eines der eingesetzten Wachse ein modifiziertes, in einem Lösungsmittel gelöstes bzw. emulgiertes HD-Polyethylenwachs ist, das in Form einer Emulsion eingesetzt wird. Solche bei Raumtemperatur noch flüssigen HD-Polyethylenwachse sind vermutlich hauptverantwortlich für die überraschend gefundene Eigenschaft des erfindungsgemäßen Lackes, auch größere bzw. tiefere Riefen in Kunststoffoberflächen, insbesondere bei PVC-Profilen, nahezu vollständig abzudecken.

Neben dem bei Raumtemperatur flüssigen, in Wasser emulgierten HD-Polyethylenwachs wird nach einer besonders bevorzugten Ausführungsform der Erfindung noch wenigstens ein weiteres, bei Raumtemperatur festes organisches Polymerwachs, insbesondere ein sogenanntes mikronisiertes Polymerwachs, eingesetzt. Solche Wachse beeinflussen insbesondere die Härte, die Blockfestigkeit, die Ritzhärte und andere mechanischen Eigenschaften sowie die Oberflächengüte der erfindungsgemäßen Lacke positiv. Bevorzugt weisen diese Wachse eine Dichte < 1 kg/dm³ auf.

Neben dem im Bindemittel dispergierten Wachs enthält der erfindungsgemäße Lack zur Beschichtung von Riefen aufweisenden Kunststoffoberflächen in dem Bindemittel dispergierte nanoskalige anorganische Partikel. Nach einer bevorzugten Ausführungsform der Erfindung werden als nanoskalige anorganische Partikel insbesondere Metalloxide, besonders bevorzugt Titandioxid und insbesondere Titandioxid in der Rutilkonfiguration eingesetzt.

Unter nanoskalig im Sinne der vorliegenden Erfindung werden Partikel verstanden, deren mittlere Abmessung < 100 nm beträgt. Bevorzugt werden Partikel eingesetzt, deren größte Abmessung < 100 nm beträgt. Nach einer besonders bevorzugten Ausführungsform der Erfindung beträgt die mittlere Teilchengröße d50 zwischen 10 und 70 nm. Es ist von wesentlicher Bedeutung, dass die Primärpartikel nicht oder in nicht nennenswertem Umfang in Form von größeren Agglomeraten vorliegen. Es werden daher bevorzugt Primärteilchen eingesetzt, die jeweils eine anorganische Oberflächenmodifizierung aufweisen, wie sie beispielsweise aus der WO 2008/023073 A1 bekannt sind. Aus solchen oberflächenmodifizierten ultrafeinen Partikeln lassen sich wässrige Dispersionen, bevorzugt in Form von Pasten, herstellen, die für die erfindungsgemäßen Lacke besonders geeignet sind.

Die erfindungsgemäß eingesetzten nanoskaligen anorganischen Partikel sind insbesondere für die gezielte Einstellung der Oberflächenspannung verantwortlich und beeinflussen die rheologischen Eigenschaften des Lackes.

Der erfindungsgemäße Lack kann bei einer ersten bevorzugten Ausführungsform der Erfindung vollständig transparent sein und weist dennoch eine hervorragende Riefen ausgleichende und überdeckende Eigenschaft sowie einen hervorragenden UV-Schutz auf. auf.

Nach einer alternativen Ausführungsform der Erfindung weist der erfindungsgemäße Lack zusätzlich Pigmente auf. Zum einen können die eingesetzten Pigmente beispielsweise übliche Weißpigmente, insbesondere Titandioxid mit einer Partikelgröße > 500 nm sein. Nach einer bevorzugten Ausführungsform der Erfindung werden nicht-weiße anorganische Pigmente, bevorzugt anorganische, insbesondere Pigmente eingesetzt. Die erfindungsgemäß eingesetzten nanoskaligen anorganischen Partikel beeinflussen dabei die Grundfarbe der nicht-weißen anorganischen Pigmente nicht oder zumindest nicht im erheblichen Maße, so dass die erfindungsgemäßen Lacke einerseits ihre hervorragende Riefen überdeckende Eigenschaften aufweisen und andererseits in nahezu beliebigen Farben hergestellt werden können. Für nicht weiße Lacke beträgt der Anteil an TiO₂ mit einer Partikelgröße > 200 nm bevorzugt kleiner als 0,5 Gew.-%.

Der erfindungsgemäße Lack kann bei Bedarf hochglänzend eingestellt werden. Er kann bei Bedarf jedoch auch mit üblichen Mattierungsmitteln, insbesondere SiO₂ und/oder geeigneten Polymerpartikeln, Polymerwachsen etc. modifiziert werden. Soweit SiO₂ als Mattierungsmittel verwendet wird, beträgt die mittlere Teilchengröße bevorzugt zwischen 3 und 40 µm, insbesondere zwischen 4 und 15 µm. Die Teilchengröße beeinflusst maßgeblich die Oberflächenstruktur der getrockneten Lackoberfläche.

Der erfindungsgemäße Lack wird insbesondere durch Aufspritzen appliziert. Das Aufspritzen und anschließende Trocknen erfolgt bevorzugt unter Erwärmung auf eine Temperatur zwischen 40 °C und 60 °C.

Der erfindungsgemäße Lack ist in der Lage Riefen in einem PVC-Substrat mit einer Tiefe von 0,2 bis 0,8 mm zu wenigstens 95 % ihrer Tiefe einzuebnen.

## Patentansprüche

1. Verfahren zum Beschichten von Riefen aufweisenden Kunststoffoberflächen durch Applizieren eines Lackes, **enthaltend**
- wenigstens ein vernetzbares Bindemittel,
- wenigstens ein in dem Bindemittel dispergiertes Wachs,
- in dem Bindemittel dispergierte nanoskalige anorganische Partikel, insbesondere Metalloxide.

2. Verfahren nach Anspruch 1, **dadurch gekennzeichnet, dass** das Applizieren des Lackes die Verfahrensschritte Aufspritzen, Erwärmen und Trocknen umfasst.

3. Verfahren nach Anspruch 1 oder 2, **dadurch gekennzeichnet, dass** als Substrat ein Riefen aufweisendes PVC-Material verwendet wird.

4. Verfahren nach einem der Ansprüche 1 bis 3, **dadurch gekennzeichnet, dass** als vernetzbares Bindemittel in dem Lack ein wasserbasierter Polyurethan-/Acrylatlack verwendet wird.

5. Verfahren nach einem der Ansprüche 1 bis 4, **dadurch gekennzeichnet, dass** in dem Lack zwei Wachse mit unterschiedlichen Schmelzpunkten eingesetzt werden.

6. Verfahren nach einem der Ansprüche 1 bis 5, **dadurch gekennzeichnet, dass** wenigstens eines der eingesetzten Wachse in Form einer Emulsion eines modifizierten, in einem Lösungsmittel gelösten HD-Polyethylenwachses eingesetzt wird.

7. Verfahren nach einem der Ansprüche 1 bis 4, **dadurch gekennzeichnet, dass** wenigstens eines der eingesetzten Wachse ein mikronisiertes, bei Raumtemperatur festes organisches Polymerwachs ist.

8. Verfahren nach einem der Ansprüche 1 bis 7, **dadurch gekennzeichnet, dass** in dem Lack wenigstens eines der eingesetzten Wachse eine Dichte > 1,4 kg/m³ bei 20 °C aufweist.

9. Verfahren nach einem der Ansprüche 1 bis 8, **dadurch gekennzeichnet, dass** in dem Lack als nanoskaliges Metalloxid ein TiO₂ eingesetzt wird.

10. Verfahren nach einem der Ansprüche 1 bis 9, **dadurch gekennzeichnet, dass** der Anteil an TiO₂ in dem Lack mit einer Partikelgröße > 200 nm kleiner als 0,5 Gew.-% beträgt.

11. Verfahren nach einem der Ansprüche 1 bis 10, **dadurch gekennzeichnet, dass** das nanoskaliges Metalloxid in dem Lack überwiegend aus inertisiertem TiO₂ in der Rutilkonfiguration besteht.

12. Verfahren nach einem der Ansprüche 1 bis 11, **dadurch gekennzeichnet, dass** das TiO₂ in dem Lack eine mittlere Teilchengröße d₅₀ zwischen 10 und 70 nm aufweist.

13. Verfahren nach einem der Ansprüche 1 bis 12, **dadurch gekennzeichnet, dass** der Lack zusätzlich ein oder mehrere anorganische Pigmente enthält.

14. Verfahren nach einem der Ansprüche 1 bis 13, **dadurch gekennzeichnet, dass** der Lack zusätzlich Mattierungsmittel aufweist.

15. Verfahren nach Anspruch 14, **dadurch gekennzeichnet, dass** als Mattierungsmittel SiO₂ verwendet wird mit einer mittleren Teilchengröße zwischen 3 und 40 µm, insbesondere zwischen 4 und 15 µm.

16. Beschichtetes PVC-Substrat, hergestellt mit einem Verfahren gemäß einem der der Ansprüche 1 bis 15, **dadurch gekennzeichnet, dass** das PVC-Substrat Riefen mit einer Tiefe > 0,2 mm aufweist und die Riefen zu wenigstens 95 % ihrer Tiefe durch die Lackierung eingeebnet wurden.

## Claims

1. Process for the coating of plastics surfaces having grooves by application of a coating material comprising
- at least one crosslinkable binder,
- at least one wax dispersed in the binder,
- nanoscale inorganic particles dispersed in the binder, in particular metal oxides.

2. Process according to Claim 1, **characterized in that** the application of the coating material comprises the steps of spray-application, heating and drying.

3. Process according to Claim 1 or 2, **characterized in that** a PVC material having grooves is used as substrate.

4. Process according to any of Claims 1 to 3, **characterized in that** a water-based polyurethane/acrylate coating material is used as crosslinkable binder in the coating material.

5. Process according to any of Claims 1 to 4, **characterized in that** two waxes with different melting points are used in the coating material.

6. Process according to any of Claims 1 to 5, **characterized in that** at least one of the waxes used is used in the form of an emulsion of a modified HD-polyethylene wax dissolved in a solvent.

7. Process according to any of Claims 1 to 4, **characterized in that** at least one of the waxes used is a micronized organic polymer wax that is solid at room temperature.

8. Process according to any of Claims 1 to 7, **characterized in that** the density of at least one of the waxes used in the coating material is > 1.4 kg/m³ at 20°C.

9. Process according to any of Claims 1 to 8, **characterized in that** a TiO₂ is used as nanoscale metal oxide in the coating material.

10. Process according to any of Claims 1 to 9, **characterized in that** the proportion of TiO₂ in the coating material with particle size > 200 nm is less than 0.5% by weight.

11. Process according to any of Claims 1 to 10, **characterized in that** the nanoscale metal oxide in the coating material is composed mainly of inertized TiO₂ in the rutile configuration.

12. Process according to any of Claims 1 to 11, **characterized in that** the median particle size d₅₀ of the TiO₂ in the coating material is from 10 to 70 nm.

13. Process according to any of Claims 1 to 12, **characterized in that** the coating material comprises one or more additional inorganic pigments.

14. Process according to any of Claims 1 to 13, **characterized in that** the coating material comprises additional matting agents.

15. Process according to Claim 14, **characterized in that** SiO₂ with median particle size from 3 to 40 µm, in particular from 4 to 15 µm, is used as matting agent.

16. Coated PVC substrate produced by a process according to any of Claims 1 to 15, **characterized in that** the PVC substrate has grooves with depth > 0.2 nm and application of the coating material levels the grooves to the extent of at least 95% of their depth.

## Revendications

1. Procédé de revêtement de surfaces en plastique comprenant des cannelures par application d'un vernis, contenant:
- au moins un liant réticulable,
- au moins une cire dispersée dans le liant,
- des particules inorganiques nanométriques dispersées dans le liant, notamment des oxydes de métaux.

2. Procédé selon la revendication 1, **caractérisé en ce que** l'application du vernis comprend les étapes de procédé de pulvérisation, chauffage et séchage.

3. Procédé selon la revendication 1 ou 2, **caractérisé en ce qu'**un matériau en PVC comprenant des cannelures est utilisé en tant que substrat.

4. Procédé selon l'une quelconque des revendications 1 à 3, **caractérisé en ce qu'**un vernis de polyuréthane/acrylate à base d'eau est utilisé en tant que liant réticulable dans le vernis.

5. Procédé selon l'une quelconque des revendications 1 à 4, **caractérisé en ce que** deux cires ayant des points de fusion différents sont utilisées dans le vernis.

6. Procédé selon l'une quelconque des revendications 1 à 5, **caractérisé en ce qu'**au moins une des cires utilisées est utilisée sous la forme d'une émulsion d'une cire de polyéthylène HD modifiée, dissoute dans un solvant.

7. Procédé selon l'une quelconque des revendications 1 à 4, **caractérisé en ce qu'**au moins une des cires utilisées est une cire polymère organique solide à température ambiante micronisée.

8. Procédé selon l'une quelconque des revendications 1 à 7, **caractérisé en ce qu'**au moins une des cires utilisées dans le vernis présente une densité > 1, 4 kg/m3 à 20 °C.

9. Procédé selon l'une quelconque des revendications 1 à 8, **caractérisé en ce qu'**un TiO₂ est utilisé dans le vernis en tant qu'oxyde de métal nanométrique.

10. Procédé selon l'une quelconque des revendications 1 à 9, **caractérisé en ce que** la proportion de TiO₂ dans le vernis ayant une taille de particule > 200 nm est inférieure à 0,5 % en poids.

11. Procédé selon l'une quelconque des revendications 1 à 10, **caractérisé en ce que** l'oxyde de métal nanométrique dans le vernis est essentiellement constitué de TiO₂ inertisé de configuration rutile.

12. Procédé selon l'une quelconque des revendications 1 à 11, **caractérisé en ce que** le TiO₂ dans le vernis présente une taille de particule moyenne d₅₀ comprise entre 10 et 70 nm.

13. Procédé selon l'une quelconque des revendications 1 à 12, **caractérisé en ce que** le vernis contient en outre un ou plusieurs pigments inorganiques.

14. Procédé selon l'une quelconque des revendications 1 à 13, **caractérisé en ce que** le vernis comprend en outre des agents matants.

15. Procédé selon la revendication 14, **caractérisé en ce que** SiO₂ est utilisé en tant qu'agent matant, ayant une taille de particule moyenne comprise entre 3 et 40 µm, notamment entre 4 et 15 µm.

16. Substrat en PVC revêtu, fabriqué par un procédé selon l'une quelconque des revendications 1 à 15, **caractérisé en ce que** le substrat en PVC comprend des cannelures ayant une profondeur > 0,2 mm et les cannelures sont aplanies sur au moins 95 % de leur profondeur par le vernissage.
